# EUROPÄISCHE PATENTSCHRIFT

(11) **EP 1 978 230 B1**
(45) Veröffentlichungstag und Bekanntmachung des Hinweises auf die Patenterteilung: **22.07.2020**
(21) Anmeldenummer: 08005628.6
(22) Anmeldetag: 26.03.2008
(51) Int. Cl.: F02G 1/02, F02G 5/02, F02B 25/10, F01K 25/08, F01C 21/08

(54) **Wärmekraftanlage, insbesondere zur Nutzung von Wärmequellen niedriger Temperatur**
Thermal energy device, in particular for using low temperature heat sources
Centrale thermique, en particulier pour l'utilisation de sources de chaleur à basse température

(30) Priorität: 03.04.2007 DE 102007017357
(43) Veröffentlichungstag der Anmeldung: 08.10.2008
(73) Patentinhaber: DeVeTec GmbH, 66386 St. Ingbert (DE)
(72) Erfinder: Schmidt, Michael, 66646 Marpingen (DE); Huckert, Marc, 66386 St. Ingbert (DE); Schnur, Rainer, 66687 Morscholz (DE)
(74) Vertreter: Patentanwälte Bauer Vorberg Kayser

(56) Entgegenhaltungen:
- WO-A2-2009/112145
- DE-A1- 4 219 498
- DE-A1- 19 938 543
- DE-A1-102004 032 215
- DE-C- 166 081
- FR-A1- 2 531 746
- JP-A- S57 131 807
- JP-A- S57 212 311
- US-A- 1 203 018
- US-A- 4 050 357
- US-A- 4 283 995

## Beschreibung

Die Erfindung betrifft eine Wärmekraftanlage nach dem Oberbegriff des Anspruchs 1.

Aus der DE 102 33 763 A1 ist eine Anlage für Kraftfahrzeuge bekannt, welche die Abwärme des Abgases nutzt, um weitere mechanische Antriebsenergie, insbesondere zum Antrieb von Nebenaggregaten, wie z.B. der Lichtmaschine, zu gewinnen. Als Arbeitsmedium dient Wasser. Durch die Auspuffwärme erzeugter Wasserdampf treibt eine Kolbendampfmaschine an.

Eine Wärmekraftanlage der eingangs erwähnten Art für die Nutzung von Wärmequellen niedriger Temperatur geht aus der FR 2531746 A1 hervor. Als Arbeitsmedium wird eine organische Flüssigkeit mit einer Siedetemperatur unterhalb derjenigen des Wassers verwendet. Die Wärmekraftanlage umfasst eine den Arbeitsraum bildende Expansionsmaschine, die ein in einem Gehäuse exzentrisch gelagertes Flügelrad mit verschiebbaren Flügeln aufweist. Eine ähnliche wärmekraftanlage ist aus DE 102004032215 bekannt. Wärmekraftanlage mit einem durch einen holben betätigbaren Einlaßventil sind aus US 4 050 357, US 1 203 018 oder JP 557 21 2311 bekannt

Der Erfindung liegt die Aufgabe zugrunde, den Aufwand zur Gewinnung mechanischer Antriebsenergie aus Wärmequellen, insbesondere Wärmequellen niedriger Temperatur, zu verringern.

Diese Aufgabe wird durch eine Wärmekraftanlage mit den Merkmalen des Anspruchs 1 gelöst.

Bei der Entspannung des Arbeitsmediums im Arbeitsraum wird hauptsächlich im Arbeitsmedium selbst enthaltene Wärmeenergie in mechanische Antriebsenergie umgewandelt. Es lässt sich eine große Differenz zwischen den Temperaturen des Arbeitsmediums vor und nach der Entspannung und damit ein hoher Wirkungsgrad erreichen.

Als Arbeitsmedium geeignet sind z.B. Ammoniak, Ethanol, Hexan oder andere Kohlenwasserstoffe. Bei solchen Arbeitsmedien können die durch Entspannung erreichbaren Endwerte von Temperatur und Druck mehr als bei Wasserdampf der Umgebungstemperatur und dem Umgebungsluftdruck angenähert sein, wodurch sich der Wirkungsgrad weiter erhöht.

Erfindungsgemäß ist das Arbeitsmedium über ein Einlassventil in den Arbeitsraum einleitbar und dieses Ventil umfasst ein Betätigungsglied zur Anlage gegen eine verschiebbare, durch den Kolben gebildete Begrenzungswand des Arbeitsraums, wobei das Betätigungsglied bei Verschiebung der Begrenzungswand zweckmäßig gegen die Kraft einer Feder bewegbar ist.

Der mit einer Kurbelwelle verbundene Kolben kommt nahe seinem oberen Totpunkt gegen das Betätigungsglied zum Anschlag. Während der Bewegung des Kolbens von der Anschlagstellung bis zum oberen Totpunkt und zurück, die trotz geringer Verschiebungsweglänge des Kolbens einen verhältnismäßigen großen Zeitraum einnimmt, tritt das unter Druck stehende Arbeitsmedium, das von einem an der Wärmequelle angeordneten Wärmetauscher herangeführt wird, in den Arbeitsraum ein. Von der Schließstellung des Ventils an ist das Arbeitsmedium im Arbeitsraum dann eingeschlossen und kann unter Entspannung und Umwandlung darin enthaltener Wärmeenergie mechanische Arbeit leisten.

Zweckmäßig ist das Betätigungsglied einstückig mit einem durch die Feder in einen Ventilsitz gepressten Ventilkörper verbunden. Bei dem Betätigungsglied kann es sich um einen zum Ventilkörper koaxialen Stift handeln, der in den Arbeitsraum hineinragt und dessen Längsachse z.B. mit der Zylinderachse zusammenfällt.

Zum Entfernen des entspannten Gases aus dem Arbeitsraum kann ein Auslassventil vorgesehen sein, dass am unteren Totpunkt des Kolbens öffnet und bei Anlage des Kolbens gegen das Betätigungsglied schließt. Ein solches Auslassventil lässt sich durch ein gesondertes, durch die Kurbelwelle angetriebenes Gestänge betätigen. Es ist aber auch möglich, das Auslassventil über das Betätigungsglied zu steuern.

Eine solche Wärmekraftanlage kann zweckmäßig zur Nutzung der Abwärme stationäre Wärmekraftmaschinen, von Fahrzeugmotoren oder der Abwärme wärmeerzeugender oder-verbrauchender Produktionsprozesse verwendet werden. Aber auch Verbrennungsanlagen, z.B. für Biomasse oder dergleichen, können als Wärmequelle dienen.

Die Erfindung wird nachfolgend anhand von Ausführungsbeispielen und der beiliegenden, sich auf diese Ausführungsbeispiele beziehenden Zeichnungen weiter erläutert. Es zeigen:
- Fig. 1: eine schematische Darstellung einer Wärmekraftanlage nach der Erfindung,
- Fig. 2: eine Schnittansicht einer in der Wärmekraftanlage von Fig. 1 verwendeten Expansionsmaschine,
- Fig. 3 und 4: Detailansichten der Expansionsmaschine von Fig. 2,
- Fig. 5: eine Schnittansicht einer weiteren in einer Wärmekraftanlage gemäß Fig. 1 verwendbaren Expansionsmaschine,
- Fig. 6: die Expansionsmaschine von Fig. 5 in einer zu der Ansicht von Fig. 5 um 90° gedrehten Seitenansicht,
- Fig. 7: ein in der Expansionsmaschine von Fig. 5 und 6 verwendbares Ventilsteuergestänge,
- Fig. 8: eine geschnittene Detailansicht der Expansionsmaschine von Fig. 5 und 6,
- Fig. 9: eine in einer Wärmekraftanlage gemäß Fig. 1 verwendbare Expansionsmaschine nach dem Stand der Technik in einer geschnittenen perspektivischen Ansicht, und
- Fig. 10: eine geschnittene Seitenansicht der Expansionsmaschine von Fig. 9.

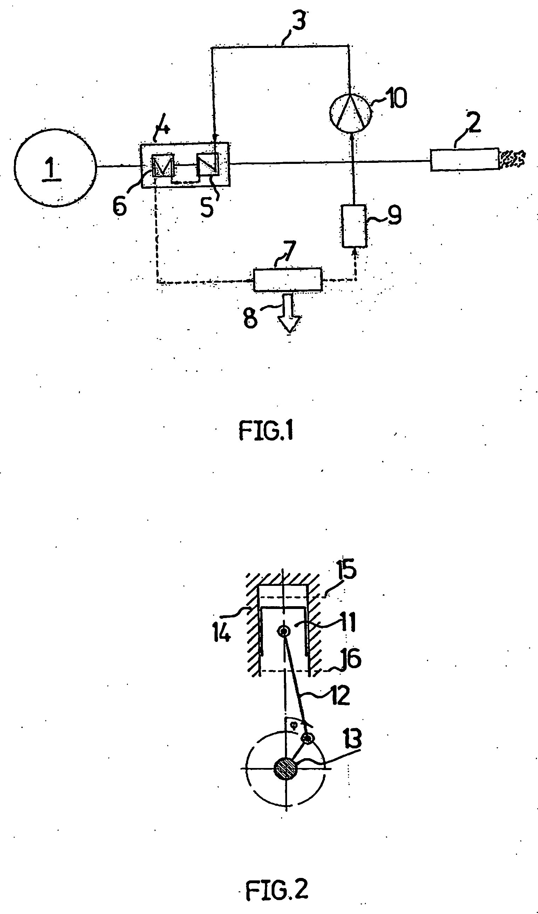

Eine in Fig. 1 gezeigte Wärmequelle 1 liefert heiße Abgase, die in dem betreffenden Ausführungsbeispiel über eine Ableiteinrichtung 2, z.B. einen Schlot, in die Atmosphäre geleitet werden. Prinzipiell kommen als Träger von Wärmeenergie auch Flüssigkeiten und sogar Feststoffe in Betracht.

Ein Kreislauf 3, welcher z.B. Ethanol oder eine andere organische Substanz als Arbeitsmedium enthält, weist einen als Verdampfer 5 und Überhitzer 6 dienenden Wärmetauscher 4 auf, in welchem Wärme von den heißen Abgasen der Wärmequelle 1 auf das Arbeitsmedium übergeht. Der unter Druck stehende heiße Dampf des Arbeitsmediums gelangt in eine Expansionsmaschine 7, welche in dem Dampf des Arbeitsmediums enthaltene Wärmeenergie in mechanische Arbeit umwandelt. Ein Pfeil 8 soll andeuten, dass diese mechanische Antriebsenergie z.B. zum Betreiben eines Generators genutzt werden kann.

Der in der Expansionsmaschine entspannte Dampf des Arbeitsmediums wird anschließend in einem Kondensator 9 verflüssigt und das verflüssigte Arbeitsmedium mit Hilfe einer Pumpe 10 schließlich wieder dem Wärmetauscher 4 bzw. Verdampfer 5 zugeführt.

Bei der Wärmequelle 1 handelt es sich z.B. um einen stationären Motor, ggf. eine Turbine einer Kraftwerksanlage. Die Wärmequelle könnte aber auch ein Fahrzeugmotor sein und sowohl Wärme von dessen Kühlmittel als auch dessen Abgasanlage genutzt werden. Als Wärmequelle in Betracht kommen wärmeerfordernde oder erzeugende Herstellungsprozesse z.B. in chemischen Industrieanlagen. Allen diesen Wärmequellen ist eine verhältnismäßig niedrige Temperatur des im Wärmetauscher 4 Wärme an das Arbeitsmedium abgebenden Wärmeträgers gemeinsam. Mögliche Wärmequellen sind aber auch Verbrennungsanlagen, z.B. für Grubengas, Biomasse und dergleichen.

Gemäß Fig. 2 kann die Expansionsmaschine 7 wie ein Verbrennungsmotor einen oder mehrere Kolben 11 aufweisen, die jeweils über ein Pleuel 12 mit einer Kurbelwelle 13 verbunden sind. In einem Zylinder 14 bewegt sich der Kolben 11 zwischen einem oberen Totpunkt 15 und einem unteren Totpunkt 16 hin und her.

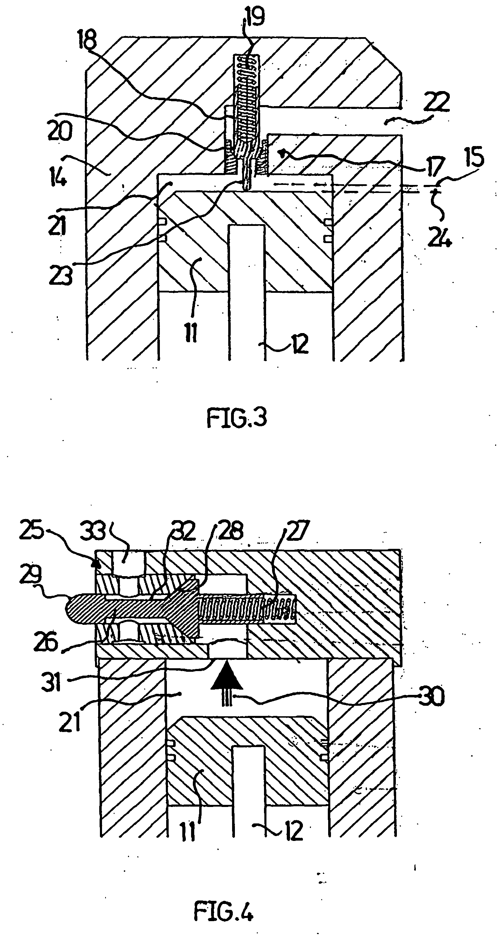

Wie Fig. 3 zeigt, umfasst jeder der Zylinder 14 ein Einlassventil 17 mit einem Ventilkörper 18, der durch eine zum Ventilkörper koaxiale Schraubenfeder 19 in einen Ventilsitz 20 gedrückt wird, so dass im geschlossenen Zustand des Ventils ein in den Arbeitsraum 21 der Kolbenzylindereinheit führender Einlasskanal 22 versperrt ist.

Wie Fig. 3 ferner erkennen lässt, ist an den Ventilkörper 18 ein Betätigungsglied 23 in Form eines vom Ventilkörper koaxial vorstehenden Stiftes angeformt, der in den Arbeitsraum 21 hineinragt und dessen Achse in dem betreffenden Ausführungsbeispiel etwa mit der Achse des Zylinders 14 zusammenfällt.

In einem kurzen Verschiebungsbereich 24 vor dem oberen Totpunkt des Kolbens 11 ist der Ventilkörper 18 durch den Kolben über das Betätigungsglied 23 gegen die Kraft der Schraubenfeder 19 aus dem Ventilsitz 20 gehoben und der Einlasskanal 22 freigegeben. Unter Druck stehendes Arbeitsmedium kann nun in den Arbeitsraum einströmen. Der Einströmvorgang ist abgeschlossen, wenn der Kolben 11 wieder die untere Grenze des Verschiebungsbereichs 24 erreicht hat. Dem kurzen Verschiebungsbereich 24 entspricht ein verhältnismäßig großer Drehwinkel der Kurbelwelle und damit ein verhältnismäßig großer Zeitraum, in welchem das Arbeitsmedium in den Arbeitsraum einströmen kann.

Das nun in dem Arbeitsraum 21 eingeschlossene Arbeitsmedium dehnt sich in dem Arbeitsraum unter Verschiebung des Kolbens 11 und des Pleuels 12 annähernd adiabatisch aus, wobei als innere Energie in dem Arbeitsmedium enthaltene Wärmeenergie in mechanische Arbeit umgesetzt wird. Bei der Ausdehnung, bei welcher der Druck des Arbeitsmediums ständig abnimmt, kühlt sich das Arbeitsmedium ab. Die verrichtete mechanische Arbeit ist etwa gleich der Wärmeenergie, die der Differenz zwischen den Temperaturen des Arbeitsmediums vor und nach dessen Entspannung entspricht. Die während des Einströmvorgangs insgesamt geleistete (positive und negative) mechanische Arbeit ist vernachlässigbar klein gegenüber der während der Entspannung des Arbeitsmediums abgegebenen mechanischen Arbeit.

Wie Fig. 4 zeigt, weisen die Zylinder ferner ein Auslassventil 25 auf, das über ein durch die Kurbelwelle 13 angetriebenes Steuergestänge (nicht gezeigt) geöffnet wird, wenn der Kolben 11 den unteren Totpunkt 16 erreicht hat, und wieder geschlossen wird, wenn der Kolben gegen das Betätigungsglied 23 des Ventils 17 anschlägt.

Das Auslassventil 25 weist einen Ventilkörper 26 auf, der durch eine Feder 27 gegen einen Ventilsitz 28 gepresst wird. Mit dem Ventilkörper 26 einstückig verbunden ist ein vom Zylinder seitlich vorstehendes Betätigungsglied 29, das gegen das genannte Steuergestänge anliegt. Bei der Bewegung des Kolbens 11 gemäß Pfeil 30 tritt das entspannte Arbeitsmedium durch eine Öffnung 31, den geöffneten Ventilsitz 28, einen durch eine Verengung des Ventilkörpers 26 gebildeten Kanal 32 und schließlich eine Öffnung 33 hindurch aus dem Zylinder 14 aus.

Die vorangehend beschriebene Expansionsmaschine kann weitgehend aus Teilen herkömmlicher Verbrennungsmotoren zusammengesetzt sein.

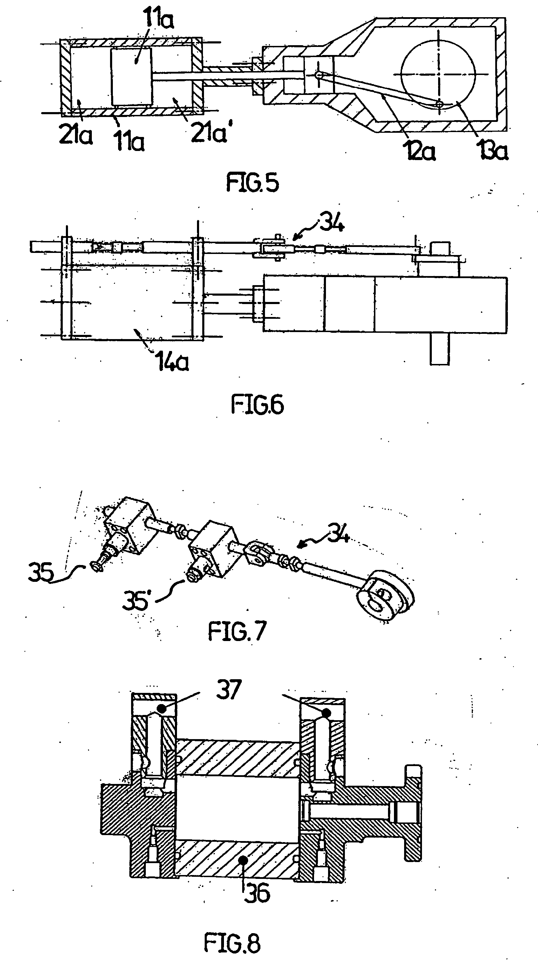

Eine in den Figuren 5 und 6 gezeigte Expansionsmaschine mit einem Kolben 11a, einem Pleuel 12a und einer Kurbelwelle 13a weist zwei Arbeitsräume 21a und 21a' auf, die auf gegenüberliegenden Seiten des sich in einem Zylinder 14a hin und her bewegenden Kolbens gebildet sind. Ein Steuergestänge 34 dient zum Öffnen und Schließen der Arbeitsräume 21 a und 21a', wie dies vorangehend anhand des Ausführungsbeispiels von Fig. 3 und 4 beschrieben ist. Mit dem Steuergestänge 34 verbunden sind Ventilkörper 35 und 35', die durch das Steuergestänge 34 abwechselnd je nach Stellung des Kolbens 11a bzw. der mit dem Steuergestänge verbundenen Kurbelwelle 13a in einen Ventilsitz hinein und aus einem Ventilsitz heraus bewegt werden.

Eine mit dem Kolben 11a verbundene Kolbenstange 38 dichtet den Schmiermittel enthaltenen Raum der Kurbelwelle 13a gegen die Arbeitsräume 21a und 21a' ab. Das Arbeitsmedium, z.B. Ethanol, wird somit vom Schmiermittel ferngehalten.

Das Bezugszeichen 36 in Fig. 8 weist auf die Lauffläche des Kolbens 11a hin, das Bezugszeichen 37 auf Auslassböcke.

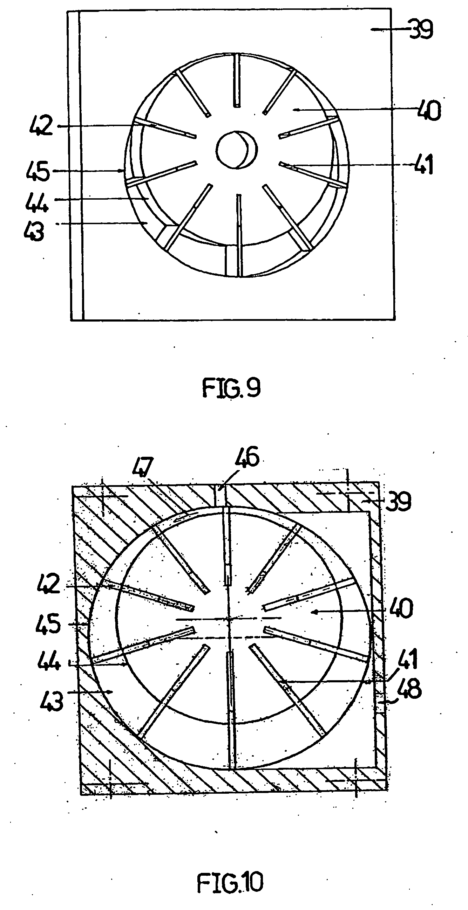

Eine in Fig. 9 und 10 gezeigte Expansionsmaschine weist ein Gehäuse 39 und ein in dem Gehäuse 39 exzentrisch angeordnetes Flügelrad 40 auf. Von einer Umfangsfläche 44 des Flügelrads 40 stehen radial in Führungen 41 im Flügelrad 40 bewegliche Flügel 42 vor. Benachbarte Flügel bilden jeweils einen Arbeitsraum 43. An der Stelle, an welcher das Flügelrad 40 mit seiner Umfangsfläche 44 einer Innenfläche 45 des Gehäuses 39 radial am nächsten kommt, weist das Gehäuse 39 eine Öffnung 46 auf, durch die hindurch unter Druck stehendes Arbeitsmedium in den jeweils zu der Öffnung 46 ausgerichteten Arbeitsraum 43 eintreten kann. Mit der Drehung des Flügelrads 40 gemäß Pfeil 47 wird das Arbeitsmedium in dem betreffenden Arbeitsraum eingeschlossen. Das Arbeitsmedium kann dann unter Antrieb des Flügelrads den Arbeitsraum ausdehnen und dabei entspannen. Die federbeaufschlagten, beweglichen Flügel 42 passen sich bei der Drehung des Flügelrads jeweils dem vergrößerten Abstand zwischen der Umfangsfläche 44 und der Innenfläche 45 an. Nach einer Drehung um etwa 180° hat der betreffende Arbeitsraum 43 seine größte Ausdehnung erreicht. Das entspannte Gas kann bei 48 aus dem Gehäuse 39 austreten.

Die vorangehend beschriebenen Wärmekraftanlagen bzw. Wärmekraftmaschinen können weitgehend ohne bauliche Veränderung lediglich durch Austausch des Arbeitsmediums an Wärmequellen unterschiedlicher Temperatur angepasst werden.

## Patentansprüche

1. Wärmekraftanlage zur Nutzung von Wärmequellen niedriger Temperatur zur Nutzung der Abwärme stationärer Wärmekraftmaschinen, der Abwärme von Produktionsprozessen oder der Abwärme von Verbrennungsanlagen, mit einem Arbeitsraum (21), in den ein unter Druck stehendes Arbeitsmedium mit einer Siedetemperatur kleiner als die Siedetemperatur von Wasser einleitbar und der durch das Arbeitsmedium unter Verrichtung mechanischer Arbeit ausdehnbar ist, wobei das Arbeitsmedium zur Verrichtung der mechanischen Arbeit ausschließlich unter Entspannung in dem Arbeitsraum (21) einschließbar ist, wobei der Arbeitsraum (21) durch einen Zylinder (14) und einen in dem Zylinder (14) verschiebbaren, eine Kurbelwelle (13) antreibenden Kolben (11) gebildet ist, wobei das Arbeitsmedium über ein Einlassventil (17) in den Arbeitsraum (21) einleitbar ist, **dadurch gekennzeichnet, dass** das Einlassventil (17) ein Betätigungsglied (23) zur Anlage gegen eine den Arbeitsraum (21) begrenzende Kolbenoberfläche des Kolbens (11) nahe dem oberen Totpunkt (15) des Kolbens (11) unter Öffnung des Einlassventils (17) aufweist, wobei das Betätigungsglied (23) durch Verschiebung des Kolbens (11) gegen die Kraft einer Schraubenfeder (19) bewegbar ist, dass das Betätigungsglied (23) einstückig mit einem durch eine Schraubenfeder (19) in einen Ventilsitz (20) gepressten Ventilkörper (18) verbunden ist, und dass der Ventilkörper (18) eine die Schraubenfeder (19) umgebende Hülse aufweist.

2. Wärmekraftanlage nach Anspruch 1, **dadurch gekennzeichnet, dass** das Arbeitsmedium einen Kohlenwasserstoff oder/und Ammoniak umfasst.

3. Wärmekraftanlage nach Anspruch 1 oder 2, **dadurch gekennzeichnet, dass** der Arbeitsraum über ein durch das Betätigungsglied gesteuertes Auslassventil entleerbar ist.

## Claims

1. A thermal power plant for the utilization of low-temperature heat sources, for the utilization of the waste heat of stationary thermal engines, the waste heat of production processes or the waste heat of incinerator plants, with a working chamber (21), into which a pressurized working medium with a boiling temperature lower than the boiling temperature of water can be fed, and which can be expanded by the working medium while performing mechanical work, wherein the working medium for performing the mechanical work can be enclosed in the working chamber (21) exclusively while being relaxed, wherein the working chamber (21) is formed by a cylinder (14) and a piston (11), which is displaceable within the cylinder (14) and drives a crank shaft (13), wherein the working medium can be fed into the working chamber (21) via an inlet valve (17), **characterized in that** the inlet valve (17) has an actuating member (23) for abutting against a piston surface, which delimits the working chamber (21), of the piston (11) close to the upper dead center (15) of the piston (11) while opening the inlet valve (17), wherein the actuating member (23) can be moved by displacing the piston (11) against the force of a helical spring (19), that the actuating member (23) is integrally connected to a valve body (18) pressed into a valve seat (20) by a helical spring (19), and that the valve body (18) has a sleeve that surrounds the helical spring (19).

2. The thermal power plant according to claim 1, **characterized in that** the working medium includes a hydrocarbon or/and ammonia.

3. The thermal power plant according to claim 1 or 2, **characterized in that** the working chamber can be emptied via an outlet valve controlled by the actuating member.

## Revendications

1. Centrale thermique pour l'utilisation de sources de chaleur à basse température pour utiliser la chaleur perdue de moteurs thermiques stationnaires, la chaleur perdue de processus de production ou la chaleur perdue d'usines d'incinération, comprenant un espace de travail (21) dans lequel peut être introduit un milieu de travail sous pression avec une température d'ébullition inférieure à la température d'ébullition d'eau et lequel peut être dilaté par le milieu de travail tout en effectuant du travail mécanique, dans lequel, pour effectuer le travail mécanique, le milieu de travail ne peut être enfermé dans l'espace de travail (21) qu'en se détendant, dans lequel l'espace de travail (21) est formé par un cylindre (14) et par un piston (11) déplaçable dans le cylindre (14) et entraînant un vilebrequin (13), dans lequel le milieu de travail peut être introduit dans l'espace de travail (21) via une soupape d'admission (17), **caractérisée par le fait que** la soupape d'admission (17) présente un organe de commande (23) destiné à s'appuyer contre une surface de piston du piston (11), qui délimite l'espace de travail (21), près du point mort haut (15) du piston (11) tout en ouvrant la soupape d'admission (17), dans lequel ledit organe de commande (23) peut être déplacé en déplaçant le piston (11) à l'encontre de la force d'un ressort hélicoïdal (19), que ledit organe de commande (23) est relié en une seule pièce à un corps de soupape (18) pressé dans un siège de soupape (20) par un ressort hélicoïdal (19), et que ledit corps de soupape (18) présente une douille entourant le ressort hélicoïdal (19).

2. Centrale thermique selon la revendication 1, **caractérisée par le fait que** le milieu de travail comprend un hydrocarbure et/ou de l'ammoniac.

3. Centrale thermique selon la revendication 1 ou 2, **caractérisée par le fait que** l'espace de travail peut être vidé via une soupape de sortie qui est commandée par ledit organe de commande.
